# EUROPEAN PATENT APPLICATION

(11) **EP 4 832 355 A1**
(43) Date of publication of application: **28.10.2026**
(21) Application number: 25198678.2
(22) Date of filing: 28.08.2025
(51) Int. Cl.: H04B 1/00

(54) **WIRELESS RECEIVING DEVICE**

(30) Priority: 25.04.2025 CN 202510529084
(71) Applicant: Getac Technology Corporation, New Taipei City 221009 (TW)
(72) Inventor: TSAI, Yin-Cheng, 11568 Taipei City (TW); CHEN, Po-Yen, 11568 Taipei City (TW); CHEN, Ying-Feng, 11568 Taipei City (TW)
(74) Representative: Viering, Jentschura & Partner mbB Patent- und Rechtsanwälte

(57) **Abstract**

A wireless receiving device includes a first external antenna connector, a second external antenna connector, a third external antenna connector, a fourth external antenna connector, and a switching circuit. The switching circuit is electrically connected to the above four external antenna connector. The first external antenna connector receives a first frequency band signal of the wireless wide area network. The second external antenna connector receives a second frequency band signal of the wireless wide area network or a first frequency band signal of a wireless local area network. The third external antenna connector receives a GNSS signal or a third frequency band signal of the wireless wide area network. The fourth external antenna connector receives a fourth frequency band signal of the wireless wide area network or a second frequency band signal of the wireless local area network.

## Description

### BACKGROUND

### Technical Field

The present disclosure relates to a receiving device, and more particularly to a wireless receiving device.

### Description of Related Art

Currently, electronic devices can be connected to external antennas via expansion sockets. However, the number and configurations of external antenna connectors limit the speed and frequency bands of wireless networks.

In order to solve the above problems, technologists in the relevant fields have tried to find solutions, but no suitable methods have been developed. Therefore, how to flexibly expand the combinations of external antennas is one of the important research and development topics at present, and has also become a signpost for urgent improvement in the relevant fields.

### SUMMARY

The present disclosure provides a wireless receiving device to improve the problems of the prior art.

In some embodiments of the present disclosure, the wireless receiving device proposed by the present disclosure includes a first external antenna connector, a second external antenna connector, a third external antenna connector, a fourth external antenna connector, and a switching circuit. The switching circuit is electrically connected to the first external antenna connector, the second external antenna connector, the third external antenna connector, and the fourth external antenna connector. The first external antenna connector receives a first frequency band signal of a wireless wide area network. The second external antenna connector receives a second frequency band signal of the wireless wide area network or a first frequency band signal of a wireless local area network. The third external antenna connector receives a global navigation satellite signal or a third frequency band signal of the wireless wide area network. The fourth external antenna connector receives a fourth frequency band signal of the wireless wide area network or a second frequency band signal of the wireless local area network.

In some embodiments of the present disclosure, the wireless receiving device further includes at least one wireless signal module. The at least one wireless signal module is electrically connected to the switching circuit.

In some embodiments of the present disclosure, the switching circuit includes a first switch. The first switch includes a first input terminal, a second input terminal, and an output terminal, in which the output terminal of the first switch is electrically connected to a first port of the at least one wireless signal module, the first input terminal of the first switch is electrically connected to a first internal antenna, and the second input terminal of the first switch is electrically connected to the first external antenna connector.

In some embodiments of the present disclosure, the switching circuit further includes a second switch, a third switch, and a fourth switch. The second switch includes a first input terminal, a second input terminal, and an output terminal, in which the output terminal of the second switch is electrically connected to a second port of the at least one wireless signal module, and the first input terminal of the second switch is electrically connected to a second internal antenna. The third switch includes a first input terminal, a second input terminal, and an output terminal, in which the output terminal of the third switch is electrically connected to a third port of the at least one wireless signal module, and the first input terminal of the third switch is electrically connected to a third internal antenna. The fourth switch includes an input terminal, a first output terminal, and a second output terminal, in which the input terminal of the fourth switch is electrically connected to the second external antenna connector, the first output terminal of the fourth switch is electrically connected to the second input terminal of the second switch, the second output terminal of the fourth switch is electrically connected to the second input terminal of the third switch. The first output terminal of the fourth switch outputs the second frequency band signal of the wireless wide area network to the second input terminal of the second switch in response to the second external antenna connector receiving the second frequency band signal of the wireless wide area network. The second output terminal of the fourth switch outputs the first frequency band signal of the wireless local area network to the second input terminal of the third switch in response to the second external antenna connector receiving the first frequency band signal of the wireless local area network.

In some embodiments of the present disclosure, the switching circuit further includes a fifth switch, a sixth switch, and a seventh switch. The fifth switch includes a first input terminal, a second input terminal, and an output terminal, in which the output terminal of the fifth switch is electrically connected to a fourth port of the at least one wireless signal module, and the first input terminal of the fifth switch is electrically connected to a fourth internal antenna. The sixth switch includes a first input terminal, a second input terminal, and an output terminal, in which the output terminal of the sixth switch is electrically connected to a fifth port of the at least one wireless signal module, and the first input terminal of the sixth switch is electrically connected to a fifth internal antenna. The seventh switch includes an input terminal, a first output terminal and a second output terminal, in which the input terminal of the seventh switch is electrically connected to the third external antenna connector, the first output terminal of the seventh switch is electrically connected to the second input terminal of the fifth switch, and the second output terminal of the seventh switch is electrically connected to the second input terminal of the sixth switch, in which the first output terminal of the fourth switch outputs the second frequency band signal of the wireless wide area network to the second input terminal of the second switch in response to the second external antenna connector receiving the second frequency band signal of the wireless wide area network, and in which the second output terminal of the fourth switch outputs the first frequency band signal of the wireless local area network to the second input terminal of the third switch in response to the second external antenna connector receiving the first frequency band signal of the wireless local area network.

In some embodiments of the present disclosure, the switching circuit further includes an eighth switch, a ninth switch, and a tenth switch. The eighth switch includes a first input terminal, a second input terminal, and an output terminal, in which the output terminal of the eighth switch is electrically connected to a sixth port of the at least one wireless signal module, and the first input terminal of the eighth switch is electrically connected to a sixth internal antenna. The ninth switch includes a first input terminal, a second input terminal, and an output terminal, in which the output terminal of the ninth switch is electrically connected to a seventh port of the at least one wireless signal module, and the first input terminal of the ninth switch is electrically connected to a seventh internal antenna. The tenth switch includes an input terminal, a first output terminal, and a second output terminal, in which the input terminal of the tenth switch is electrically connected to the a fourth external antenna connector, the first output terminal of the tenth switch is electrically connected to the second input terminal of the eighth switch, and the second output terminal of the tenth switch is electrically connected to the second input terminal of the ninth switch, in which the first output terminal of the tenth switch outputs the fourth frequency band signal of the wireless wide area network to the second input terminal of the eighth switch in response to the fourth external antenna connector receiving the fourth frequency band signal of the wireless wide area network, and in which the second output terminal of the tenth switch outputs the second frequency band signal of the wireless local area network to the second input terminal of the ninth switch in response to the fourth external antenna connector receiving the second frequency band signal of the wireless local area network.

In some embodiments of the present disclosure, the first frequency band signal of the wireless wide area network is a main signal of the wireless wide area network. The second frequency band signal of the wireless wide area network is an auxiliary signal of the wireless wide area network. The third frequency band signal of the wireless wide area network is a first multiple-input multiple-output signal of the wireless wide area network. The fourth frequency band signal of the wireless wide area network is a second multiple-input multiple-output signal of the wireless wide area network. The first frequency band signal of the wireless local area network is a main signal of the wireless local area network. The second frequency band signal of the wireless local area network is an auxiliary signal of the wireless local area network.

In some embodiments of the present disclosure, the wireless receiving device proposed by the present disclosure includes a first external antenna connector, a second external antenna connector, a third external antenna connector, a fourth external antenna connector, and a switching circuit. The switching circuit is electrically connected to the first external antenna connector, the second external antenna connector, the third external antenna connector, and the fourth external antenna connector. The first external antenna connector receives a first frequency band signal of a wireless wide area network. The second external antenna connector receives a second frequency band signal of the wireless wide area network or a first frequency band signal of a wireless local area network. The third external antenna connector receives a global navigation satellite signal or a third frequency band signal of the wireless wide area network. The fourth external antenna connector receives a fourth frequency band signal of the wireless wide area network.

In some embodiments of the present disclosure, the wireless receiving device further includes a first wireless signal module. The first wireless signal module is electrically connected to the switching circuit. The first wireless signal module receives the first frequency band signal of the wireless wide area network, the second frequency band signal of the wireless wide area network, the third frequency band signal of the wireless wide area network, the fourth frequency band signal of the wireless wide area network, and the global navigation satellite signal through the switching circuit.

In some embodiments of the present disclosure, the switching circuit includes a first switch. The first switch includes a first input terminal, a second input terminal, and an output terminal, in which the output terminal of the first switch is electrically connected to a first port of the first wireless signal module, the first input terminal of the first switch is electrically connected to a first internal antenna, and the second input terminal of the first switch is electrically connected to the first external antenna connector.

In some embodiments of the present disclosure, the wireless receiving device further includes a second wireless signal module. The second wireless signal module is electrically connected to the switching circuit. The second wireless signal module receives the first frequency band signal of the wireless local area network through the switching circuit.

In some embodiments of the present disclosure, the switching circuit includes a second switch. The second switch includes a first input terminal, a second input terminal, and an output terminal, in which the output terminal of the second switch is electrically connected to a second port of the first wireless signal module, and the first input terminal of the second switch is electrically connected to a second internal antenna. The third switch includes a first input terminal, a second input terminal, and an output terminal, in which the output terminal of the third switch is electrically connected to a first port of the second wireless signal module, and the first input terminal of the third switch is electrically connected to a third internal antenna. The fourth switch includes an input terminal, a first output terminal, and a second output terminal, in which the input terminal of the fourth switch is electrically connected to the second external antenna connector, the first output terminal of the fourth switch is electrically connected to the second input terminal of the second switch, and the second output terminal of the fourth switch is electrically connected to the second input terminal of the third switch. The first output terminal of the fourth switch outputs the second frequency band signal of the wireless wide area network to the second input terminal of the second switch in response to the second external antenna connector receiving the second frequency band signal of the wireless wide area network. The second output terminal of the fourth switch outputs the first frequency band signal of the wireless local area network to the second input terminal of the third switch in response to the second external antenna connector receiving the first frequency band signal of the wireless local area network.

In some embodiments of the present disclosure, the switching circuit further includes a fifth switch, a sixth switch, and a seventh switch. The fifth switch includes a first input terminal, a second input terminal, and an output terminal, in which the output terminal of the fifth switch is electrically connected to a third port of the first wireless signal module, and the first input terminal of the fifth switch is electrically connected to a fourth internal antenna. The sixth switch includes a first input terminal, a second input terminal, and an output terminal, in which the output terminal of the sixth switch is electrically connected to a fourth port of the first wireless signal module, and the first input terminal of the sixth switch is electrically connected to a fifth internal antenna. The seventh switch includes an input terminal, a first output terminal, and a second output terminal, in which the input terminal of the seventh switch is electrically connected to the third external antenna connector, the first output terminal of the seventh switch is electrically connected to the second input terminal of the fifth switch, and the second output terminal of the seventh switch is electrically connected to the second input terminal of the sixth switch. The first output terminal of the seventh switch outputs the third frequency band signal of the wireless wide area network to the second input terminal of the fifth switch in response to the third external antenna connector receiving the third frequency band signal of the wireless wide area network. The second output terminal of the seventh switch outputs the global navigation satellite signal to the second input terminal of the sixth switch in response to the third external antenna connector receiving the global navigation satellite signal.

In some embodiments of the present disclosure, the switching circuit further includes an eighth switch. The eighth switch includes a first input terminal, a second input terminal, and an output terminal, in which the output terminal of the eighth switch is electrically connected to a fifth port of the first wireless signal module, the first input terminal of the eighth switch is electrically connected to a sixth internal antenna, and the second input terminal of the eighth switch is electrically connected to the fourth external antenna connector.

In some embodiments of the present disclosure, the first frequency band signal of the wireless wide area network is a main signal of the wireless wide area network. The second frequency band signal of the wireless wide area network is an auxiliary signal of the wireless wide area network. The third frequency band signal of the wireless wide area network is a first multiple-input multiple-output signal of the wireless wide area network. The fourth frequency band signal of the wireless wide area network is a second multiple-input multiple-output signal of the wireless wide area network. The first frequency band signal of the wireless local area network is a main signal of the wireless local area network.

In summary, the technical scheme of the present disclosure has obvious advantages and beneficial effects compared with the prior art. Through the wireless receiving device of the present disclosure, the combinations of external antennas may be flexibly expanded to more completely utilize the speed and frequency bands of the wireless network.

The above description may be described in detail below with reference to implementation examples, and a further explanation may be provided for the technical scheme of the present disclosure.

### BRIEF DESCRIPTION OF THE DRAWINGS

This disclosure can be more fully understood by reading the following detailed description of the embodiments, with reference made to the accompanying drawings as follows:
FIG. 1 is a block diagram of a wireless receiving device in accordance with some embodiments of the present disclosure.
FIG. 2 is a block diagram of a wireless receiving device in accordance with some embodiments of the present disclosure.

### DETAILED DESCRIPTION

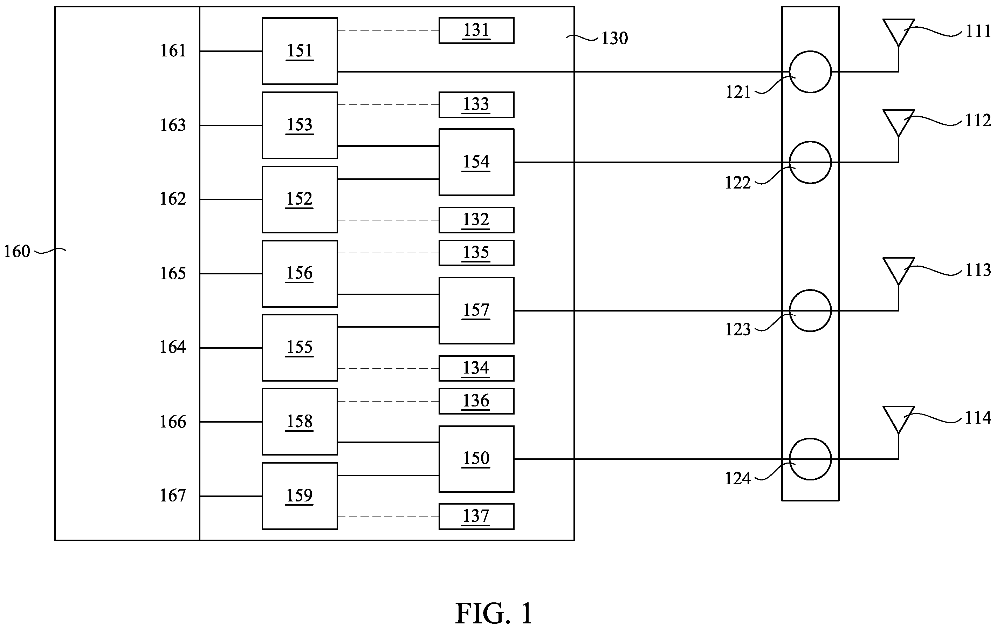

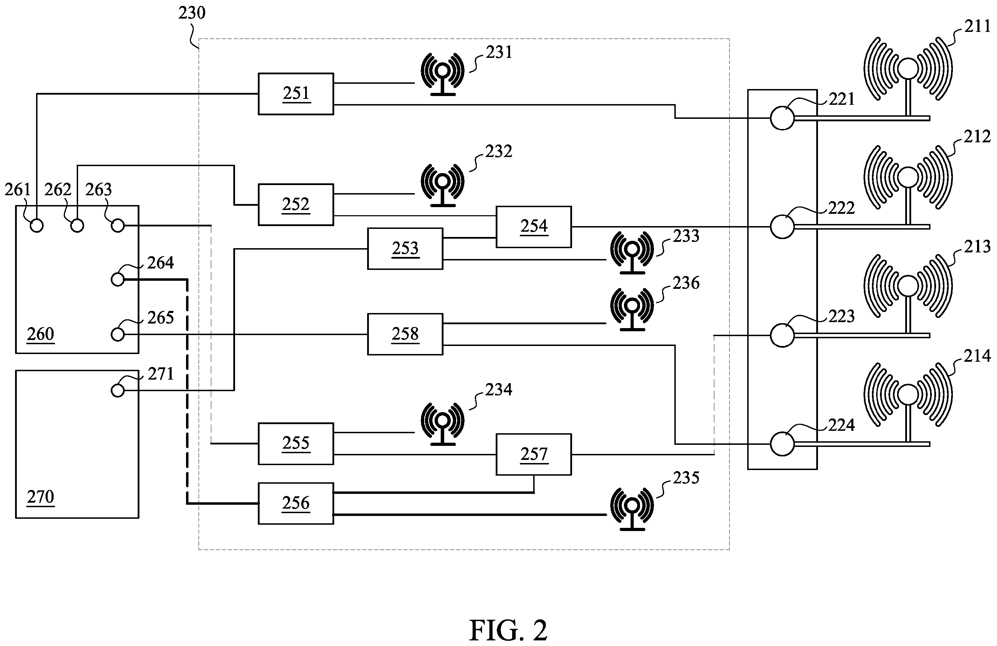

Please refer to FIG. 1 and FIG. 2. The technical aspect of the present disclosure is a wireless receiving device, which may be applied to electronic devices and/or docking stations, or widely utilized in related technical links. The wireless receiving device of this technical aspect may achieve considerable technical progress and has a wide range of industrial utilization value. The following may be utilized in conjunction with FIG. 1 and FIG. 2 to illustrate the specific implementation of the wireless receiving device.

It should be understood that various embodiments of the wireless receiving device are described in conjunction with FIG. 1 and FIG. 2. In the following description, for ease of explanation, many specific details are further set to provide a comprehensive description of one or more embodiments. However, the present technology may be implemented without these specific details. In other examples, in order to effectively describe these embodiments, known structures and devices are shown in block diagram form. The term "for example" utilized here means "as an example, instance or illustration". Any embodiment described here as "for example" does not need to be interpreted as better or superior to other embodiments.

FIG. 1 is a block diagram of a wireless receiving device in accordance with some embodiments of the present disclosure. As shown in FIG. 1, the wireless receiving device proposed by the present disclosure includes a first external antenna connector 121, a second external antenna connector 122, a third external antenna connector 123, a fourth external antenna connector 124, and a switching circuit 130.

In terms of architecture, the switching circuit 130 is electrically connected to the first external antenna connector 121, the second external antenna connector 122, the third external antenna connector 123, and the fourth external antenna connector 124.

When in use, the first external antenna connector 121 receives a first frequency band signal of a wireless wide area network, the second external antenna connector 122 receives a second frequency band signal of the wireless wide area network or a first frequency band signal of a wireless local area network, the third external antenna connector 123 receives a global navigation satellite signal (GNSS signal) or a third frequency band signal of the wireless wide area network, and the fourth external antenna connector 124 receives a fourth frequency band signal of the wireless wide area network or a second frequency band signal of the wireless local area network.

Regarding the first external antenna connector 121, in practice, for example, the first external antenna connector 121 is utilized to electrically connect to a first external antenna 111, and the first external antenna connector 121 receives the first frequency band signal of the wireless wide area network through the first external antenna 111.

Regarding the second external antenna connector 122, in practice, for example, the second external antenna connector 122 is utilized to electrically connect to a second external antenna 112, and the second external antenna connector 122 receives the second frequency band signal of the wireless wide area network or the first frequency band signal of the wireless local area network through the second external antenna 112. If the second external antenna 112 is an external antenna of the second frequency band of the wireless wide area network, the second external antenna connector 122 receives the second frequency band signal of the wireless wide area network. If the second external antenna 112 is an external antenna of the first frequency band of the wireless local area network, the second external antenna connector 122 receives the first frequency band signal of the wireless local area network.

Regarding the third external antenna connector 123, in practice, for example, the third external antenna connector 123 is utilized to electrically connect to a third external antenna 113, and the third external antenna connector 123 receives the global navigation satellite signal or the third frequency band signal of the wireless wide area network through the third external antenna 113. If the third external antenna 113 is an external antenna of a global navigation satellite system, the third external antenna connector 123 receives the global navigation satellite signal. If the third external antenna 113 is an external antenna of the third frequency band of the wireless wide area network, the third external antenna connector 123 receives the third frequency band signal of the wireless wide area network.

Regarding the fourth external antenna connector 124, in practice, for example, the fourth external antenna connector 124 is utilized to electrically connect to a fourth external antenna 114, and the fourth external antenna connector 124 receives the fourth frequency band signal of the wireless wide area network or the second frequency band signal of the wireless local area network through the fourth external antenna 114. If the fourth external antenna 114 is an external antenna of the fourth frequency band of the wireless wide area network, the fourth external antenna connector 124 receives the fourth frequency band signal of the wireless wide area network. If the fourth external antenna 114 is an external antenna of the second frequency band of the wireless local area network, the fourth external antenna connector 124 receives the second frequency band signal of the wireless local area network.

In some embodiments of the present disclosure, the wireless receiving device further includes a wireless signal module 160. In terms of architecture, the wireless signal module 160 is electrically connected to the switching circuit 130. In practice, for example, the wireless signal module 160 may generally refer to one or more wireless signal modules, such as one or more wireless signal processing circuits.

To further explain the specific structure of the switching circuit 130, please continue to refer to FIG. 1. In some embodiments of the present disclosure, the switching circuit 130 includes a first switch 151. In terms of structure, the first switch 151 includes a first input terminal, a second input terminal, and an output terminal. The output terminal of the first switch 151 is electrically connected to a first port 161 of the wireless signal module 160. The first input terminal of the first switch 151 is electrically connected to a first internal antenna 131. The second input terminal of the first switch 151 is electrically connected to the first external antenna connector 121.

In practice, for example, the first internal antenna 131 may be an internal antenna of the first frequency band of the wireless wide area network, and the first external antenna 111 may be an external antenna of the first frequency band of the wireless wide area network. The switching circuit 130 or its control circuit may control the first switch 151 to receive the first frequency band signal of the wireless wide area network from the first internal antenna 131 or the first external antenna 111 according to user instructions or preset programs.

In practice, for example, the first switch 151 is a single-pole double-throw switch. When the first external antenna connector 121 is not electrically connected to the first external antenna 111, the first switch 151 transmits the first frequency band signal of the wireless wide area network of the first internal antenna 131 to the first port 161 of the wireless signal module 160. On the contrary, when the first external antenna connector 121 is electrically connected to the first external antenna 111, the first switch 151 is switched to not receive the first frequency band signal of the wireless wide area network of the first internal antenna 131, and the first switch 151 transmits the first frequency band signal of the wireless wide area network received by the first external antenna connector 121 to the first port 161 of the wireless signal module 160, but the present disclosure is not limited to this example.

In some embodiments of the present disclosure, the switching circuit 130 further includes a second switch 152, a third switch 153, and a fourth switch 154.

The second switch 152 includes a first input terminal, a second input terminal, and an output terminal. In terms of structure, the output terminal of the second switch 152 is electrically connected to a second port 162 of the wireless signal module 160, and the first input terminal of the second switch 152 is electrically connected to a second internal antenna 132.

The third switch 153 includes a first input terminal, a second input terminal, and an output terminal. In terms of structure, the output terminal of the third switch 153 is electrically connected to a third port 163 of the wireless signal module 160, and the first input terminal of the third switch 153 is electrically connected to a third internal antenna 133.

The fourth switch 154 includes an input terminal, a first output terminal, and a second output terminal. In terms of architecture, the input terminal of the fourth switch 154 is electrically connected to the second external antenna connector 122, the first output terminal of the fourth switch 154 is electrically connected to the second input terminal of the second switch 152, and the second output terminal of the fourth switch 154 is electrically connected to the second input terminal of the third switch 153.

In practice, for example, the fourth switch 154 may be a single-pole double-throw bandpass filter. When in use, when the second external antenna connector 122 receives the second frequency band signal of the wireless wide area network, the first output terminal of the fourth switch 154 outputs the second frequency band signal of the wireless wide area network to the second input terminal of the second switch 152, and the second output terminal of the fourth switch 154 does not output the second frequency band signal of the wireless wide area network. On the contrary, when the second external antenna connector 122 receives the first frequency band signal of the wireless local area network, the second output terminal of the fourth switch 154 outputs the first frequency band signal of the wireless local area network to the second input terminal of the third switch 153, and the first output terminal of the fourth switch 154 does not output the first frequency band signal of the wireless local area network.

In practice, for example, the second internal antenna 132 may be an internal antenna of the second frequency band of the wireless wide area network, and the second external antenna 112 may be an external antenna of the second frequency band of the wireless wide area network. The switching circuit 130 or its control circuit may control the second switch 152 to receive the second frequency band signal of the wireless wide area network from the second internal antenna 132 or the second external antenna 112 according to user instructions or preset programs.

In practice, for example, the second switch 152 may be a single-pole double-throw switch. When the second external antenna connector 122 is not electrically connected to the second external antenna 112, the second switch 152 transmits the second frequency band signal of the wireless wide area network of the second internal antenna 132 to the second port 162 of the wireless signal module 160. On the contrary, when the second external antenna 112 is an external antenna of the second frequency band of the wireless wide area network and is electrically connected to the second external antenna connector 122, the second switch 152 is switched to not receive the second frequency band signal of the wireless wide area network of the second internal antenna 132, and the second switch 152 transmits the second frequency band signal of the wireless wide area network of the second external antenna 112 obtained by the fourth switch 154 to the second port 162 of the wireless signal module 160, but the present disclosure is not limited to this example.

In practice, for example, the third internal antenna 133 may be an internal antenna of the first frequency band of the wireless local area network, and the second external antenna 112 may be an external antenna of the first frequency band of the wireless local area network. The switching circuit 130 or its control circuit may control the third switch 153 to receive the first frequency band signal of the wireless local area network from the third internal antenna 133 or the second external antenna 112 according to user instructions or preset programs.

In practice, for example, the third switch 153 may be a single-pole double-throw switch. When the second external antenna connector 122 is not electrically connected to the second external antenna 112, the third switch 153 transmits the first frequency band signal of the wireless local area network of the third internal antenna 133 to the third port 163 of the wireless signal module 160. On the contrary, when the second external antenna 112 is an external antenna of the first frequency band of the wireless local area network and is electrically connected to the second external antenna connector 122, the third switch 153 is switched to not receive the first frequency band signal of the wireless local area network of the third internal antenna 133, and the third switch 153 transmits the first frequency band signal of the wireless local area network of the second external antenna 112 obtained by the fourth switch 154 to the third port 163 of the wireless signal module 160.

In some embodiments of the present disclosure, the switching circuit 130 further includes a fifth switch 155, a sixth switch 156, and a seventh switch 157.

The fifth switch 155 includes a first input terminal, a second input terminal, and an output terminal. In terms of structure, the output terminal of the fifth switch 155 is electrically connected to a fourth port 164 of the wireless signal module 160, and the first input terminal of the fifth switch 155 is electrically connected to a fourth internal antenna 134.

The sixth switch 156 includes a first input terminal, a second input terminal, and an output terminal. In terms of structure, the output terminal of the sixth switch 156 is electrically connected to a fifth port 165 of the wireless signal module 160, and the first input terminal of the sixth switch 156 is electrically connected to a fifth internal antenna 135.

The seventh switch 157 includes an input terminal, a first output terminal, and a second output terminal. In terms of architecture, the input terminal of the seventh switch 157 is electrically connected to the third external antenna connector 123, the first output terminal of the seventh switch 157 is electrically connected to the second input terminal of the fifth switch 155, and the second output terminal of the seventh switch 157 is electrically connected to the second input terminal of the sixth switch 156.

In practice, for example, the seventh switch 157 may be a single-pole double-throw bandpass filter. When in use, when the third external antenna connector 123 receives the third frequency band signal of the wireless wide area network, the first output terminal of the seventh switch 157 outputs the third frequency band signal of the wireless wide area network to the second input terminal of the fifth switch 155, and the second output terminal of the seventh switch 157 does not output the third frequency band signal of the wireless wide area network. On the contrary, when the third external antenna connector 123 receives the global navigation satellite signal, the second output terminal of the seventh switch 157 outputs the global navigation satellite signal to the second input terminal of the sixth switch 156, and the first output terminal of the seventh switch 157 does not output the global navigation satellite signal.

In practice, for example, the fourth internal antenna 134 may be an internal antenna of the third frequency band of the wireless wide area network, and the third external antenna 113 may be an external antenna of the third frequency band of the wireless wide area network. The switching circuit 130 or its control circuit may control the fifth switch 155 to receive the third frequency band signal of the wireless wide area network from the fourth internal antenna 134 or the third external antenna 113 according to user instructions or preset programs.

In practice, for example, the fifth switch 155 may be a single-pole double-throw switch. When the third external antenna connector 123 is not electrically connected to the third external antenna 113, the fifth switch 155 transmits the third frequency band signal of the wireless wide area network of the fourth internal antenna 134 to the fourth port 164 of the wireless signal module 160. On the contrary, when the third external antenna 113 is an external antenna of the third frequency band of the wireless wide area network and is electrically connected to the third external antenna connector 123, the fifth switch 155 is switched to not receive the third frequency band signal of the wireless wide area network of the fourth internal antenna 134, and the fifth switch 155 transmits the third frequency band signal of the wireless wide area network of the third external antenna 113 obtained by the seventh switch 157 to the fourth port 164 of the wireless signal module 160, but the present disclosure is not limited to this example.

In practice, for example, the fifth internal antenna 135 may be an internal antenna of the global navigation satellite system, and the third external antenna 113 may be an external antenna of the global navigation satellite system. The switching circuit 130 or its control circuit may control the sixth switch 156 to receive the global navigation satellite signal from the fifth internal antenna 135 or the third external antenna 113 according to user instructions or preset programs.

In practice, for example, the sixth switch 156 may be a single-pole double-throw switch. When the third external antenna connector 123 is not electrically connected to the third external antenna 113, the sixth switch 156 transmits the global navigation satellite signal of the fifth internal antenna 135 to the fifth port 165 of the wireless signal module 160. On the contrary, when the third external antenna 113 is an external antenna of the global navigation satellite system and is electrically connected to the third external antenna connector 123, the sixth switch 156 is switched to not receive the global navigation satellite signal of the fifth internal antenna 135, and the sixth switch 156 transmits the global navigation satellite signal of the third external antenna 113 obtained by the seventh switch 157 to the fifth port 165 of the wireless signal module 160, but the present disclosure is not limited to this example.

In some embodiments of the present disclosure, the switching circuit 130 further includes an eighth switch 158, a ninth switch 159, and a tenth switch 150.

The eighth switch 158 includes a first input terminal, a second input terminal, and an output terminal. In terms of structure, the output terminal of the eighth switch 158 is electrically connected to a sixth port 166 of the wireless signal module 160, and the first input terminal of the eighth switch 158 is electrically connected to a sixth internal antenna 136.

The ninth switch 159 includes a first input terminal, a second input terminal, and an output terminal. In terms of structure, the output terminal of the ninth switch 159 is electrically connected to a seventh port 167 of the wireless signal module 160, and the first input terminal of the ninth switch 159 is electrically connected to a seventh internal antenna 137.

The tenth switch 150 includes an input terminal, a first output terminal, and a second output terminal. In terms of architecture, the input terminal of the tenth switch 150 is electrically connected to the fourth external antenna connector 124, the first output terminal of the tenth switch 150 is electrically connected to the second input terminal of the eighth switch 158, and the second output terminal of the tenth switch 150 is electrically connected to the second input terminal of the ninth switch 159.

In practice, for example, the tenth switch 150 may be a single-pole double-throw bandpass filter. When in use, when the fourth external antenna connector 124 receives a fourth frequency band signal of the wireless wide area network, the first output terminal of the tenth switch 150 outputs the fourth frequency band signal of the wireless wide area network to the second input terminal of the eighth switch 158. On the contrary, when the fourth external antenna connector 124 receives a second frequency band signal of the wireless local area network, the second output terminal of the tenth switch 150 outputs the second frequency band signal of the wireless local area network to the second input terminal of the ninth switch 159.

In practice, for example, the sixth internal antenna 136 may be an internal antenna of the fourth frequency band of the wireless wide area network, and the fourth external antenna 114 may be an external antenna of the fourth frequency band of the wireless wide area network. The switching circuit 130 or its control circuit may control the eighth switch 158 to receive the fourth frequency band signal of the wireless wide area network from the sixth internal antenna 136 or the fourth external antenna 114 according to user instructions or preset programs.

In practice, for example, the eighth switch 158 may be a single-pole double-throw switch. When the fourth external antenna connector 124 is not electrically connected to the fourth external antenna 114, the eighth switch 158 transmits the fourth frequency band signal of the wireless wide area network of the sixth internal antenna 136 to the sixth port 166 of the wireless signal module 160. On the contrary, when the fourth external antenna 114 is an external antenna of the fourth frequency band of the wireless wide area network and is electrically connected to the fourth external antenna connector 124, the eighth switch 158 is switched to not receive the fourth frequency band signal of the wireless wide area network of the sixth internal antenna 136, and the eighth switch 158 transmits the fourth frequency band signal of the wireless wide area network of the fourth external antenna 114 obtained by the tenth switch 150 to the sixth port 166 of the wireless signal module 160, but the present disclosure is not limited to this example.

In practice, for example, the seventh internal antenna 137 may be an internal antenna of the second frequency band of the wireless local area network, and the fourth external antenna 114 may be an external antenna of the second frequency band of the wireless local area network. The switching circuit 130 or its control circuit may control the ninth switch 159 to receive the second frequency band signal of the wireless local area network from the seventh internal antenna 137 or the fourth external antenna 114 according to user instructions or preset programs.

In practice, for example, the ninth switch 159 may be a single-pole double-throw switch. When the fourth external antenna connector 124 is not electrically connected to the fourth external antenna 114, the ninth switch 159 transmits the second frequency band signal of the wireless local area network of the seventh internal antenna 137 to the seventh port 167 of the wireless signal module 160. On the contrary, when the fourth external antenna 114 is an external antenna of the second frequency band of the wireless local area network and is electrically connected to the fourth external antenna connector 124, the ninth switch 159 is switched to not receive the second frequency band signal of the wireless local area network of the seventh internal antenna 137, and the ninth switch 159 transmits the second frequency band signal of the wireless local area network obtained by the tenth switch 150 to the seventh port 167 of the wireless signal module 160, but the present disclosure is not limited to this example.

In some embodiments of the present disclosure, the first frequency band signal of the wireless wide area network (such as 5G) received by the first external antenna connector 121 may be a main signal of the wireless wide area network. The second frequency band signal of the wireless wide area network received by the second external antenna connector 122 may be an auxiliary signal of the wireless wide area network. The third frequency band signal of the wireless wide area network received by the third external antenna connector 123 may be a first multiple-input multiple-output (MIMO1) signal of the wireless wide area network. The fourth frequency band signal of the wireless wide area network received by the fourth external antenna connector 124 may be a second multiple-input multiple-output (MIMO2) signal of the wireless wide area network. The first frequency band signal of the wireless local area network received by the second external antenna connector 122 may be a main signal of the wireless local area network (such as Wi-Fi), and the second frequency band signal of the wireless local area network received by the fourth external antenna connector 124 may be an auxiliary signal of the wireless local area network. The global navigation satellite signal received by the third external antenna connector 123 may be a global positioning system signal or other satellite communication signals.

FIG. 2 is a block diagram of a wireless receiving device in accordance with some embodiments of the present disclosure. As shown in FIG. 2, the wireless receiving device of the present disclosure includes a first external antenna connector 221, a second external antenna connector 222, a third external antenna connector 223, a fourth external antenna connector 224, and a switching circuit 230.

In terms of architecture, the switching circuit 230 is electrically connected to the first external antenna connector 221, the second external antenna connector 222, the third external antenna connector 223, and the fourth external antenna connector 224.

When in use, the first external antenna connector 221 receives a first frequency band signal of a wireless wide area network, the second external antenna connector 222 receives a second frequency band signal of the wireless wide area network or a first frequency band signal of a wireless local area network, the third external antenna connector 223 receives a global navigation satellite signal or a third frequency band signal of the wireless wide area network, and the fourth external antenna connector 224 receives a fourth frequency band signal of the wireless wide area network.

Regarding the first external antenna connector 221, in practice, for example, the first external antenna connector 221 is utilized to electrically connect to the first external antenna 211, and the first external antenna connector 221 receives the first frequency band signal of the wireless wide area network through the first external antenna 211.

Regarding the second external antenna connector 222, in practice, for example, the second external antenna connector 222 is utilized to electrically connect to the second external antenna 212, and the second external antenna connector 222 receives the second frequency band signal of the wireless wide area network or the first frequency band signal of the wireless local area network through the second external antenna 212. If the second external antenna 212 is an external antenna of the second frequency band of the wireless wide area network, the second external antenna connector 222 receives the second frequency band signal of the wireless wide area network. If the second external antenna 212 is an external antenna of the first frequency band of the wireless local area network, the second external antenna connector 222 receives the first frequency band signal of the wireless local area network.

Regarding the third external antenna connector 223, in practice, for example, the third external antenna connector 223 is utilized to electrically connect to the third external antenna 213, and the third external antenna connector 223 receives the global navigation satellite signal or the third frequency band signal of the wireless wide area network through the third external antenna 213. If the third external antenna 213 is an external antenna of the global navigation satellite system, the third external antenna connector 223 receives the global navigation satellite signal. If the third external antenna 213 is an external antenna of the third frequency band of the wireless wide area network, the third external antenna connector 223 receives the third frequency band signal of the wireless wide area network.

Regarding the fourth external antenna connector 224, in practice, for example, the fourth external antenna connector 224 is utilized to electrically connect to the fourth external antenna 214, and the fourth external antenna connector 224 receives the fourth frequency band signal of the wireless wide area network through the fourth external antenna 214.

In some embodiments of the present disclosure, the wireless receiving device may include a first wireless signal module 260. In terms of architecture, the first wireless signal module 260 is electrically connected to the switching circuit 230. In practice, for example, the first wireless signal module 260 may be a wireless wide area network signal processing circuit or a similar processing circuit. When in use, the first wireless signal module 260 receives the first frequency band signal of the wireless wide area network, the second frequency band signal of the wireless wide area network, the third frequency band signal of the wireless wide area network, the fourth frequency band signal of the wireless wide area network, and the global navigation satellite signal through the switching circuit 230.

In some embodiments of the present disclosure, the wireless receiving device may include a second wireless signal module 270. In terms of architecture, the second wireless signal module 270 is electrically connected to the switching circuit 230. In practice, for example, the second wireless signal module 270 may be a wireless local area network signal processing circuit or a similar processing circuit. When in use, the second wireless signal module 270 receives the first frequency band signal of the wireless local area network through the switching circuit 230.

To further explain the specific structure of the switching circuit 130, please continue to refer to FIG. 1. In some embodiments of the present disclosure, the switching circuit 230 includes a first switch 251. In terms of structure, the first switch 251 includes a first input terminal, a second input terminal, and an output terminal. The output terminal of the first switch 251 is electrically connected to a first port 261 of the first wireless signal module 260. The first input terminal of the first switch 251 is electrically connected to a first internal antenna 231. The second input terminal of the first switch 251 is electrically connected to the first external antenna connector 221.

In practice, for example, the first internal antenna 231 may be an internal antenna of the first frequency band of the wireless wide area network, and the first external antenna 211 may be an external antenna of the first frequency band of the wireless wide area network. The switching circuit 230 or its control circuit may control the first switch 251 to receive the first frequency band signal of the wireless wide area network from the first internal antenna 231 or the first external antenna 211 according to user instructions or preset programs.

In practice, for example, the first switch 251 is a single-pole double-throw switch. When the first external antenna connector 221 is not electrically connected to the first external antenna 211, the first switch 251 transmits the first frequency band signal of the wireless wide area network of the first internal antenna 231 to the first port 261 of the first wireless signal module 260. On the contrary, when the first external antenna connector 221 is electrically connected to the first external antenna 111, the first switch 251 is switched to not receive the first frequency band signal of the wireless wide area network of the first internal antenna 231, and the first switch 251 transmits the first frequency band signal of the wireless wide area network received by the first external antenna connector 221 to the first port 161 of the first wireless signal module 260, but the present disclosure is not limited to this example.

In some embodiments of the present disclosure, the switching circuit 230 includes a second switch 252, a third switch 253, and a fourth switch 254.

The second switch 252 includes a first input terminal, a second input terminal, and an output terminal. In terms of structure, the output terminal of the second switch 252 is electrically connected to the second port 262 of the first wireless signal module 260, and the first input terminal of the second switch 252 is electrically connected to the second internal antenna 232.

The third switch 253 includes a first input terminal, a second input terminal, and an output terminal. In terms of structure, the output terminal of the third switch 253 is electrically connected to the first port 271 of the second wireless signal module 270, and the first input terminal of the third switch 253 is electrically connected to the third internal antenna 233.

The fourth switch 254 includes an input terminal, a first output terminal, and a second output terminal. In terms of architecture, the input terminal of the fourth switch 254 is electrically connected to the second external antenna connector 222, the first output terminal of the fourth switch 254 is electrically connected to the second input terminal of the second switch 252, and the second output terminal of the fourth switch 254 is electrically connected to the second input terminal of the third switch 253.

In practice, for example, the fourth switch 254 may be a single-pole double-throw bandpass filter. When in use, when the second external antenna connector 222 receives the second frequency band signal of the wireless wide area network, the first output terminal of the fourth switch 254 outputs the second frequency band signal of the wireless wide area network to the second input terminal of the second switch 252, and the second output terminal of the fourth switch 254 does not output the second frequency band signal of the wireless wide area network. On the contrary, when the second external antenna connector 222 receives the first frequency band signal of the wireless local area network, the second output terminal of the fourth switch 254 outputs the first frequency band signal of the wireless local area network to the second input terminal of the third switch 253, and the first output terminal of the fourth switch 254 does not output the first frequency band signal of the wireless local area network.

In practice, for example, the second internal antenna 232 may be an internal antenna of the second frequency band of the wireless wide area network, and the second external antenna 212 may be an external antenna of the second frequency band of the wireless wide area network. The switching circuit 230 or its control circuit may control the second switch 252 to receive the second frequency band signal of the wireless wide area network from the second internal antenna 232 or the second external antenna 212 according to user instructions or preset programs.

In practice, for example, the second switch 252 may be a single-pole double-throw switch. When the second external antenna connector 222 is not electrically connected to the second external antenna 212, the second switch 252 transmits the second frequency band signal of the wireless wide area network of the second internal antenna 232 to the second port 262 of the first wireless signal module 260. On the contrary, when the second external antenna 212 is an external antenna of the second frequency band of the wireless wide area network and is electrically connected to the second external antenna connector 222, the second switch 252 is switched to not receive the second frequency band signal of the wireless wide area network of the second internal antenna 232, and the second switch 252 transmits the second frequency band signal of the wireless wide area network of the second external antenna 212 obtained by the fourth switch 254 to the second port 262 of the first wireless signal module 260, but the present disclosure is not limited to this example.

In practice, for example, the third internal antenna 233 may be an internal antenna of the first frequency band of the wireless local area network, and the second external antenna 212 may be an external antenna of the first frequency band of the wireless local area network. The switching circuit 230 or its control circuit may control the third switch 253 to receive the first frequency band signal of the wireless local area network from the third internal antenna 233 or the second external antenna 212 according to user instructions or preset programs.

In practice, for example, the third switch 253 may be a single-pole double-throw switch. When the second external antenna connector 222 is not electrically connected to the second external antenna 212, the third switch 253 transmits the first frequency band signal of the wireless local area network of the third internal antenna 233 to the first port 271 of the second wireless signal module 270. On the contrary, when the second external antenna 212 is an external antenna of the first frequency band of the wireless local area network and is electrically connected to the second external antenna connector 222, the third switch 253 is switched to not receive the first frequency band signal of the wireless local area network of the third internal antenna 233, and the third switch 253 transmits the first frequency band signal of the wireless local area network of the second external antenna 212 obtained by the fourth switch 254 to the first port 271 of the second wireless signal module 270.

In some embodiments of the present disclosure, the switching circuit 230 further includes a fifth switch 255, a sixth switch 256, and a seventh switch 257.

The fifth switch 255 includes a first input terminal, a second input terminal and an output terminal. In terms of structure, the output terminal of the fifth switch 255 is electrically connected to a third port 263 of the first wireless signal module 260, and the first input terminal of the fifth switch 255 is electrically connected to a fourth internal antenna 234.

The sixth switch 256 includes a first input terminal, a second input terminal, and an output terminal. In terms of structure, the output terminal of the sixth switch 256 is electrically connected to a fourth port 264 of the first wireless signal module 260, and the first input terminal of the sixth switch 256 is electrically connected to the fifth internal antenna 235.

The seventh switch 257 includes an input terminal, a first output terminal, and a second output terminal. In terms of architecture, the input terminal of the seventh switch 257 is electrically connected to the third external antenna connector 223, the first output terminal of the seventh switch 257 is electrically connected to the second input terminal of the fifth switch 255, and the second output terminal of the seventh switch 257 is electrically connected to the second input terminal of the sixth switch 256.

In practice, for example, the seventh switch 257 may be a single-pole double-throw bandpass filter. When in use, when the third external antenna connector 223 receives the third frequency band signal of the wireless wide area network, the first output terminal of the seventh switch 257 outputs the third frequency band signal of the wireless wide area network to the second input terminal of the fifth switch 255, and the second output terminal of the seventh switch 257 does not output the third frequency band signal of the wireless wide area network. On the contrary, when the third external antenna connector 223 receives the global navigation satellite signal, the second output terminal of the seventh switch 257 outputs the global navigation satellite signal to the second input terminal of the sixth switch 256, and the first output terminal of the seventh switch 257 does not output the global navigation satellite signal.

In practice, for example, the fourth internal antenna 234 may be an internal antenna of the third frequency band of the wireless wide area network, and the third external antenna 213 may be an external antenna of the third frequency band of the wireless wide area network. The switching circuit 230 or its control circuit may control the fifth switch 255 to receive the third frequency band signal of the wireless wide area network from the fourth internal antenna 234 or the third external antenna 213 according to user instructions or preset programs.

In practice, for example, the fifth switch 255 may be a single-pole double-throw switch. When the third external antenna connector 223 is not electrically connected to the third external antenna 213, the fifth switch 255 transmits the third frequency band signal of the wireless wide area network of the fourth internal antenna 234 to the third port 263 of the first wireless signal module 260. On the contrary, when the third external antenna 213 is an external antenna of the third frequency band of the wireless wide area network and is electrically connected to the third external antenna connector 223, the fifth switch 255 is switched to not receive the third frequency band signal of the wireless wide area network of the fourth internal antenna 234, and the fifth switch 255 transmits the third frequency band signal of the wireless wide area network of the third external antenna 213 obtained by the seventh switch 257 to the third port 263 of the first wireless signal module 260, but the present disclosure is not limited to this example.

In practice, for example, the fifth internal antenna 235 may be an internal antenna of a global navigation satellite system, and the third external antenna 213 may be an external antenna of a global navigation satellite system. The switching circuit 230 or its control circuit may control the sixth switch 256 to receive the global navigation satellite signal from the fifth internal antenna 235 or the third external antenna 213 according to user instructions or preset programs.

In practice, for example, the sixth switch 256 may be a single-pole double-throw switch. When the third external antenna connector 223 is not electrically connected to the third external antenna 213, the sixth switch 256 transmits the global navigation satellite signal of the fifth internal antenna 235 to the fourth port 264 of the first wireless signal module 260. On the contrary, when the third external antenna 213 is an external antenna of the global navigation satellite system and is electrically connected to the third external antenna connector 223, the sixth switch 256 is switched to not receive the global navigation satellite signal of the fifth internal antenna 235, and the sixth switch 256 transmits the global navigation satellite signal of the third external antenna 213 obtained by the seventh switch 257 to the fourth port 264 of the first wireless signal module 260, but the present disclosure is not limited to this example.

In some embodiments of the present disclosure, the switching circuit 230 further includes an eighth switch 258. The eighth switch 258 includes a first input terminal, a second input terminal, and an output terminal. In terms of architecture, the output terminal of the eighth switch 258 is electrically connected to a fifth port 265 of the first wireless signal module 260, the first input terminal of the eighth switch 258 is electrically connected to the sixth internal antenna 236, and the second input terminal of the eighth switch 258 is electrically connected to the fourth external antenna connector 224.

In practice, for example, the sixth internal antenna 136 may be an internal antenna of the fourth frequency band of the wireless wide area network, and the fourth external antenna 114 may be an external antenna of the fourth frequency band of the wireless wide area network. The switching circuit 130 or its control circuit may control the eighth switch 158 to receive the fourth frequency band signal of the wireless wide area network from the sixth internal antenna 136 or the fourth external antenna 114 according to user instructions or preset programs.

In practice, for example, the eighth switch 258 may be a single-pole double-throw switch. When the fourth external antenna connector 224 is not electrically connected to the fourth external antenna 214, the eighth switch 258 transmits the fourth frequency band signal of the wireless wide area network of the sixth internal antenna 236 to the fifth port 265 of the first wireless signal module 260. On the contrary, when the fourth external antenna 214 is an external antenna of the fourth frequency band of the wireless wide area network and is electrically connected to the fourth external antenna connector 224, the eighth switch 258 is switched to not receive the fourth frequency band signal of the wireless wide area network of the sixth internal antenna 236, and the eighth switch 258 transmits the fourth frequency band signal of the wireless wide area network of the fourth external antenna 114 obtained by the fourth external antenna connector 224 to the fifth port 265 of the first wireless signal module 260, but the present disclosure is not limited to this example.

In some embodiments of the present disclosure, the first frequency band signal of the wireless wide area network received by the first external antenna connector 221 may be a main signal of the wireless wide area network, the second frequency band signal of the wireless wide area network received by the second external antenna connector 222 may be an auxiliary signal of the wireless wide area network, the third frequency band signal of the wireless wide area network received by the third external antenna connector 223 may be a first multiple-input multiple-output signal of the wireless wide area network, and the fourth frequency band signal of the wireless wide area network received by the fourth external antenna connector 224 may be a second multiple-input multiple-output signal of the wireless wide area network. The first frequency band signal of the wireless local area network received by the second external antenna connector 122 may be a main signal of the wireless local area network. The global navigation satellite signal received by the third external antenna connector 223 may be a global positioning system signal or other satellite communication signal.

In summary, the technical scheme of the present disclosure has obvious advantages and beneficial effects compared with the prior art. By utilizing the wireless receiving device of the present disclosure, the combinations of external antennas may be flexibly expanded to more completely utilize the speed and frequency bands of the wireless network.

## Claims

1. A wireless receiving device, **characterized by** comprising:
a first external antenna connector (121, 221), receiving a first frequency band signal of a wireless wide area network;
a second external antenna connector (122, 222), receiving a second frequency band signal of the wireless wide area network or a first frequency band signal of a wireless local area network;
a third external antenna connector (123, 223), receiving a global navigation satellite signal or a third frequency band signal of the wireless wide area network;
a fourth external antenna connector (124, 224), receiving a fourth frequency band signal of the wireless wide area network or a second frequency band signal of the wireless local area network; and
a switching circuit (130, 230), electrically connected to the first external antenna connector (121, 221), the second external antenna connector (122, 222), the third external antenna connector (123, 223), and the fourth external antenna connector (124, 224).

2. The wireless receiving device of claim 1, **characterized by** further comprising:
at least one wireless signal module (160), electrically connected to the switching circuit (130, 230).

3. The wireless receiving device of claim 2, **characterized in that** the switching circuit (130, 230) comprises:
a first switch (151, 251) comprising a first input terminal, a second input terminal, and an output terminal, wherein the output terminal of the first switch (151, 251) is electrically connected to a first port (161, 261, 271) of the at least one wireless signal module (160), the first input terminal of the first switch (151, 251) is electrically connected to a first internal antenna (131, 231), and the second input terminal of the first switch (151, 251) is electrically connected to the first external antenna connector (121, 221).

4. The wireless receiving device of claim 3, **characterized in that** the switching circuit (130, 230) further comprises:
a second switch (152, 252), comprising a first input terminal, a second input terminal, and an output terminal, wherein the output terminal of the second switch (152, 252) is electrically connected to a second port (162, 262) of the at least one wireless signal module (160), and the first input terminal of the second switch (152, 252) is electrically connected to a second internal antenna (132, 232);
a third switch (153, 253), comprising a first input terminal, a second input terminal, and an output terminal, wherein the output terminal of the third switch (153, 253) is electrically connected to a third port (163, 263) of the at least one wireless signal module (160), and the first input terminal of the third switch (153, 253) is electrically connected to a third internal antenna (133, 233); and
a fourth switch (154, 254), comprising an input terminal, a first output terminal, and a second output terminal, wherein the input terminal of the fourth switch (154, 254) is electrically connected to the second external antenna connector (122, 222), the first output terminal of the fourth switch (154, 254) is electrically connected to the second input terminal of the second switch (152, 252), the second output terminal of the fourth switch (154, 254) is electrically connected to the second input terminal of the third switch (153, 253),
wherein the first output terminal of the fourth switch (154, 254) outputs the second frequency band signal of the wireless wide area network to the second input terminal of the second switch (152, 252) in response to the second external antenna connector (122, 222) receiving the second frequency band signal of the wireless wide area network,
and wherein the second output terminal of the fourth switch (154, 254) outputs the first frequency band signal of the wireless local area network to the second input terminal of the third switch (153, 253) in response to the second external antenna connector (122, 222) receiving the first frequency band signal of the wireless local area network.

5. The wireless receiving device of claim 4, **characterized in that** the switching circuit (130, 230) further comprises:
a fifth switch (155, 255), comprising a first input terminal, a second input terminal, and an output terminal, wherein the output terminal of the fifth switch (155, 255) is electrically connected to a fourth port (164, 264) of the at least one wireless signal module (160), and the first input terminal of the fifth switch (155, 255) is electrically connected to a fourth internal antenna (134, 234);
a sixth switch (156, 256), comprising a first input terminal, a second input terminal, and an output terminal, wherein the output terminal of the sixth switch (156, 256) is electrically connected to a fifth port (165, 265) of the at least one wireless signal module (160), and the first input terminal of the sixth switch (156, 256) is electrically connected to a fifth internal antenna (135, 235); and
a seventh switch (157, 257) comprising an input terminal, a first output terminal and a second output terminal, wherein the input terminal of the seventh switch (157, 257) is electrically connected to the third external antenna connector (123, 223), the first output terminal of the seventh switch (157, 257) is electrically connected to the second input terminal of the fifth switch (155, 255), and the second output terminal of the seventh switch (157, 257) is electrically connected to the second input terminal of the sixth switch (156, 256),
wherein the first output terminal of the seventh switch (157, 257) outputs the third frequency band signal of the wireless wide area network to the second input terminal of the fifth switch (155, 255) in response to the third external antenna connector (123, 223) receiving the third frequency band signal of the wireless wide area network,
and wherein the second output terminal of the seventh switch (157, 257) outputs the global navigation satellite signal to the second input terminal of the sixth switch (156, 256) in response to the third external antenna connector (123, 223) receiving the global navigation satellite signal.

6. The wireless receiving device of claim 5, **characterized in that** the switching circuit (130, 230) further comprises:
an eighth switch (158, 258), comprising a first input terminal, a second input terminal, and an output terminal, wherein the output terminal of the eighth switch (158, 258) is electrically connected to a sixth port (166) of the at least one wireless signal module (160), and the first input terminal of the eighth switch (158, 258) is electrically connected to a sixth internal antenna (136, 236);
a ninth switch (159), comprising a first input terminal, a second input terminal, and an output terminal, wherein the output terminal of the ninth switch (159) is electrically connected to a seventh port (167) of the at least one wireless signal module (160), and the first input terminal of the ninth switch (159) is electrically connected to a seventh internal antenna (137); and
a tenth switch, comprising an input terminal, a first output terminal, and a second output terminal, wherein the input terminal of the tenth switch is electrically connected to the a fourth external antenna connector (124, 224), the first output terminal of the tenth switch is electrically connected to the second input terminal of the eighth switch (158, 258), and the second output terminal of the tenth switch is electrically connected to the second input terminal of the ninth switch (159),
wherein the first output terminal of the tenth switch outputs the fourth frequency band signal of the wireless wide area network to the second input terminal of the eighth switch in response to the fourth external antenna connector (124, 224) receiving the fourth frequency band signal of the wireless wide area network,
and wherein the second output terminal of the tenth switch outputs the second frequency band signal of the wireless local area network to the second input terminal of the ninth switch (159) in response to the fourth external antenna connector (124, 224) receiving the second frequency band signal of the wireless local area network.

7. The wireless receiving device of any of claims 1 to 6, **characterized in that** the first frequency band signal of the wireless wide area network is a main signal of the wireless wide area network, the second frequency band signal of the wireless wide area network is an auxiliary signal of the wireless wide area network, the third frequency band signal of the wireless wide area network is a first multiple-input multiple-output signal of the wireless wide area network, the fourth frequency band signal of the wireless wide area network is a second multiple-input multiple-output signal of the wireless wide area network, wherein the first frequency band signal of the wireless local area network is a main signal of the wireless local area network, and the second frequency band signal of the wireless local area network is an auxiliary signal of the wireless local area network.

8. A wireless receiving device, **characterized by** comprising:
a first external antenna connector (121, 221), receiving a first frequency band signal of a wireless wide area network;
a second external antenna connector (122, 222), receiving a second frequency band signal of the wireless wide area network or a first frequency band signal of a wireless local area network;
a third external antenna connector (123, 223), receiving a global navigation satellite signal or a third frequency band signal of the wireless wide area network;
a fourth external antenna connector (124, 224), receiving a fourth frequency band signal of the wireless wide area network; and
a switching circuit (130, 230), electrically connecting the first external antenna connector (121, 221), the second external antenna connector (122, 222), the third external antenna connector (123, 223), and the fourth external antenna connector (124, 224).

9. The wireless receiving device of claim 8, **characterized by** further comprising:
a first wireless signal module (260) electrically connected to the switching circuit (130, 230), wherein the first wireless signal module (260) receives the first frequency band signal of the wireless wide area network, the second frequency band signal of the wireless wide area network, the third frequency band signal of the wireless wide area network, the fourth frequency band signal of the wireless wide area network, and the global navigation satellite signal through the switching circuit (130, 230).

10. The wireless receiving device of claim 9, **characterized in that** the switching circuit (130, 230) comprises:
a first switch (151, 251) comprising a first input terminal, a second input terminal, and an output terminal, wherein the output terminal of the first switch (151, 251) is electrically connected to a first port (161, 261, 271) of the first wireless signal module (260), the first input terminal of the first switch (151, 251) is electrically connected to a first internal antenna (131, 231), and the second input terminal of the first switch (151, 251) is electrically connected to the first external antenna connector (121, 221).

11. The wireless receiving device of claim 9 or 10, **characterized by** further comprising:
a second wireless signal module (270) electrically connected to the switching circuit (130, 230), wherein the second wireless signal module (270) receives the first frequency band signal of the wireless local area network through the switching circuit (130, 230).

12. The wireless receiving device of claim 11, **characterized in that** the switching circuit (130, 230) comprises:
a second switch (152, 252), comprising a first input terminal, a second input terminal, and an output terminal, wherein the output terminal of the second switch (152, 252) is electrically connected to a second port (162, 262) of the first wireless signal module (260), and the first input terminal of the second switch (152, 252) is electrically connected to a second internal antenna (132, 232);
a third switch (153, 253), comprising a first input terminal, a second input terminal, and an output terminal, wherein the output terminal of the third switch (153, 253) is electrically connected to a first port (161, 261, 271) of the second wireless signal module (270), and the first input terminal of the third switch (153, 253) is electrically connected to a third internal antenna (133, 233); and
a fourth switch (154, 254), comprising an input terminal, a first output terminal, and a second output terminal, wherein the input terminal of the fourth switch (154, 254) is electrically connected to the second external antenna connector (122, 222), the first output terminal of the fourth switch (154, 254) is electrically connected to the second input terminal of the second switch (152, 252), the second output terminal of the fourth switch (154, 254) is electrically connected to the second input terminal of the third switch (153, 253),
wherein the first output terminal of the fourth switch (154, 254) outputs the second frequency band signal of the wireless wide area network to the second input terminal of the second switch (152, 252) in response to the second external antenna connector (122, 222) receiving the second frequency band signal of the wireless wide area network,
and wherein the second output terminal of the fourth switch outputs the first frequency band signal of the wireless local area network to the second input terminal of the third switch (153, 253) in response to the second external antenna connector (122, 222) receiving the first frequency band signal of the wireless local area network.

13. The wireless receiving device of claim 12, **characterized in that** the switching circuit (130, 230) further comprises:
a fifth switch (155, 255), comprising a first input terminal, a second input terminal, and an output terminal, wherein the output terminal of the fifth switch (155, 255) is electrically connected to a third port (163, 263) of the first wireless signal module (260), and the first input terminal of the fifth switch (155, 255) is electrically connected to a fourth internal antenna (134, 234);
a sixth switch (156, 256), comprising a first input terminal, a second input terminal, and an output terminal, wherein the output terminal of the sixth switch (156, 256) is electrically connected to a fourth port (164, 264) of the first wireless signal module (260), and the first input terminal of the sixth switch (156, 256) is electrically connected to a fifth internal antenna (135, 235); and
a seventh switch (157, 257) comprising an input terminal, a first output terminal, and a second output terminal, wherein the input terminal of the seventh switch (157, 257) is electrically connected to the third external antenna connector (123, 223), the first output terminal of the seventh switch (157, 257) is electrically connected to the second input terminal of the fifth switch (155, 255), and the second output terminal of the seventh switch (157, 257) is electrically connected to the second input terminal of the sixth switch (156, 256),
wherein the first output terminal of the seventh switch (157, 257) outputs the third frequency band signal of the wireless wide area network to the second input terminal of the fifth switch (155, 255) in response to the third external antenna connector (123, 223) receiving the third frequency band signal of the wireless wide area network,
and wherein the second output terminal of the seventh switch (157, 257) outputs the global navigation satellite signal to the second input terminal of the sixth switch (156, 256) in response to the third external antenna connector (123, 223) receiving the global navigation satellite signal.

14. The wireless receiving device of claim 13, **characterized in that** the switching circuit (130, 230) further comprises:
an eighth switch (158, 258), comprising a first input terminal, a second input terminal, and an output terminal, wherein the output terminal of the eighth switch (158, 258) is electrically connected to a fifth port (165, 265) of the first wireless signal module (260), the first input terminal of the eighth switch (158, 258) is electrically connected to a sixth internal antenna (136, 236), and the second input terminal of the eighth switch (158, 258) is electrically connected to the fourth external antenna connector (124, 224).

15. The wireless receiving device of any of claims 8 to 14, **characterized in that** the first frequency band signal of the wireless wide area network is a main signal of the wireless wide area network, the second frequency band signal of the wireless wide area network is an auxiliary signal of the wireless wide area network, the third frequency band signal of the wireless wide area network is a first multiple-input multiple-output signal of the wireless wide area network, the fourth frequency band signal of the wireless wide area network is a second multiple-input multiple-output signal of the wireless wide area network, and the first frequency band signal of the wireless local area network is a main signal of the wireless local area network.

## Amended claims

### Amended claims in accordance with Rule 137(2) EPC.

1. A wireless receiving device, comprising:
a first external antenna connector (121, 221), receiving a first frequency band signal of a wireless wide area network;
a second external antenna connector (122, 222), receiving a second frequency band signal of the wireless wide area network or a first frequency band signal of a wireless local area network;
a third external antenna connector (123, 223), receiving a global navigation satellite signal or a third frequency band signal of the wireless wide area network;
a fourth external antenna connector (124, 224), receiving a fourth frequency band signal of the wireless wide area network or a second frequency band signal of the wireless local area network;
a switching circuit (130, 230), electrically connected to the first external antenna connector (121, 221), the second external antenna connector (122, 222), the third external antenna connector (123, 223), and the fourth external antenna connector (124, 224); and
at least one wireless signal module (160), electrically connected to the switching circuit (130, 230);
wherein the switching circuit (130, 230) comprises:
a first switch (151, 251) comprising a first input terminal, a second input terminal, and an output terminal, wherein the output terminal of the first switch (151, 251) is electrically connected to a first port (161, 261, 271) of the at least one wireless signal module (160), the first input terminal of the first switch (151, 251) is electrically connected to a first internal antenna (131, 231), and the second input terminal of the first switch (151, 251) is electrically connected to the first external antenna connector (121, 221);
a second switch (152, 252), comprising a first input terminal, a second input terminal, and an output terminal, wherein the output terminal of the second switch (152, 252) is electrically connected to a second port (162, 262) of the at least one wireless signal module (160), and the first input terminal of the second switch (152, 252) is electrically connected to a second internal antenna (132, 232);
a third switch (153, 253), comprising a first input terminal, a second input terminal, and an output terminal, wherein the output terminal of the third switch (153, 253) is electrically connected to a third port (163, 263) of the at least one wireless signal module (160), and the first input terminal of the third switch (153, 253) is electrically connected to a third internal antenna (133, 233); and
a fourth switch (154, 254), comprising an input terminal, a first output terminal, and a second output terminal, wherein the input terminal of the fourth switch (154, 254) is electrically connected to the second external antenna connector (122, 222), the first output terminal of the fourth switch (154, 254) is electrically connected to the second input terminal of the second switch (152, 252), the second output terminal of the fourth switch (154, 254) is electrically connected to the second input terminal of the third switch (153, 253),
wherein the first output terminal of the fourth switch (154, 254) is configured to output the second frequency band signal of the wireless wide area network to the second input terminal of the second switch (152, 252) in response to the second external antenna connector (122, 222) receiving the second frequency band signal of the wireless wide area network,
wherein the second output terminal of the fourth switch (154, 254) is configured to output the first frequency band signal of the wireless local area network to the second input terminal of the third switch (153, 253) in response to the second external antenna connector (122, 222) receiving the first frequency band signal of the wireless local area network.

2. The wireless receiving device of claim 1, **characterized in that** the switching circuit (130, 230) further comprises:
a fifth switch (155, 255), comprising a first input terminal, a second input terminal, and an output terminal, wherein the output terminal of the fifth switch (155, 255) is electrically connected to a fourth port (164, 264) of the at least one wireless signal module (160), and the first input terminal of the fifth switch (155, 255) is electrically connected to a fourth internal antenna (134, 234);
a sixth switch (156, 256), comprising a first input terminal, a second input terminal, and an output terminal, wherein the output terminal of the sixth switch (156, 256) is electrically connected to a fifth port (165, 265) of the at least one wireless signal module (160), and the first input terminal of the sixth switch (156, 256) is electrically connected to a fifth internal antenna (135, 235); and
a seventh switch (157, 257) comprising an input terminal, a first output terminal and a second output terminal, wherein the input terminal of the seventh switch (157, 257) is electrically connected to the third external antenna connector (123, 223), the first output terminal of the seventh switch (157, 257) is electrically connected to the second input terminal of the fifth switch (155, 255), and the second output terminal of the seventh switch (157, 257) is electrically connected to the second input terminal of the sixth switch (156, 256),
wherein the first output terminal of the seventh switch (157, 257) is configured to output the third frequency band signal of the wireless wide area network to the second input terminal of the fifth switch (155, 255) in response to the third external antenna connector (123, 223) receiving the third frequency band signal of the wireless wide area network,
and wherein the second output terminal of the seventh switch (157, 257) is configured to output the global navigation satellite signal to the second input terminal of the sixth switch (156, 256) in response to the third external antenna connector (123, 223) receiving the global navigation satellite signal.

3. The wireless receiving device of claim 2, **characterized in that** the switching circuit (130, 230) further comprises:
an eighth switch (158, 258), comprising a first input terminal, a second input terminal, and an output terminal, wherein the output terminal of the eighth switch (158, 258) is electrically connected to a sixth port (166) of the at least one wireless signal module (160), and the first input terminal of the eighth switch (158, 258) is electrically connected to a sixth internal antenna (136, 236);
a ninth switch (159), comprising a first input terminal, a second input terminal, and an output terminal, wherein the output terminal of the ninth switch (159) is electrically connected to a seventh port (167) of the at least one wireless signal module (160), and the first input terminal of the ninth switch (159) is electrically connected to a seventh internal antenna (137); and
a tenth switch, comprising an input terminal, a first output terminal, and a second output terminal, wherein the input terminal of the tenth switch is electrically connected to the a fourth external antenna connector (124, 224), the first output terminal of the tenth switch is electrically connected to the second input terminal of the eighth switch (158, 258), and the second output terminal of the tenth switch is electrically connected to the second input terminal of the ninth switch (159),
wherein the first output terminal of the tenth switch is configured to output the fourth frequency band signal of the wireless wide area network to the second input terminal of the eighth switch in response to the fourth external antenna connector (124, 224) receiving the fourth frequency band signal of the wireless wide area network,
and wherein the second output terminal of the tenth switch is configured to output the second frequency band signal of the wireless local area network to the second input terminal of the ninth switch (159) in response to the fourth external antenna connector (124, 224) receiving the second frequency band signal of the wireless local area network.

4. The wireless receiving device of any of claims 1 to 3, **characterized in that** the first frequency band signal of the wireless wide area network is a main signal of the wireless wide area network, the second frequency band signal of the wireless wide area network is an auxiliary signal of the wireless wide area network, the third frequency band signal of the wireless wide area network is a first multiple-input multiple-output signal of the wireless wide area network, the fourth frequency band signal of the wireless wide area network is a second multiple-input multiple-output signal of the wireless wide area network, wherein the first frequency band signal of the wireless local area network is a main signal of the wireless local area network, and the second frequency band signal of the wireless local area network is an auxiliary signal of the wireless local area network.

5. A wireless receiving device, comprising:
a first external antenna connector (121, 221), receiving a first frequency band signal of a wireless wide area network;
a second external antenna connector (122, 222), receiving a second frequency band signal of the wireless wide area network or a first frequency band signal of a wireless local area network;
a third external antenna connector (123, 223), receiving a global navigation satellite signal or a third frequency band signal of the wireless wide area network;
a fourth external antenna connector (124, 224), receiving a fourth frequency band signal of the wireless wide area network;
a switching circuit (130, 230), electrically connecting the first external antenna connector (121, 221), the second external antenna connector (122, 222), the third external antenna connector (123, 223), and the fourth external antenna connector (124, 224);
a first wireless signal module (260) electrically connected to the switching circuit (130, 230), wherein the first wireless signal module (260) receives the first frequency band signal of the wireless wide area network, the second frequency band signal of the wireless wide area network, the third frequency band signal of the wireless wide area network, the fourth frequency band signal of the wireless wide area network, and the global navigation satellite signal through the switching circuit (130, 230); and
a second wireless signal module (270) electrically connected to the switching circuit (130, 230), wherein the second wireless signal module (270) receives the first frequency band signal of the wireless local area network through the switching circuit (130, 230);
wherein the switching circuit (130, 230) comprises:
a second switch (152, 252), comprising a first input terminal, a second input terminal, and an output terminal, wherein the output terminal of the second switch (152, 252) is electrically connected to a second port (162, 262) of the first wireless signal module (260), and the first input terminal of the second switch (152, 252) is electrically connected to a second internal antenna (132, 232);
a third switch (153, 253), comprising a first input terminal, a second input terminal, and an output terminal, wherein the output terminal of the third switch (153, 253) is electrically connected to a first port (161, 261, 271) of the second wireless signal module (270), and the first input terminal of the third switch (153, 253) is electrically connected to a third internal antenna (133, 233); and
a fourth switch (154, 254), comprising an input terminal, a first output terminal, and a second output terminal, wherein the input terminal of the fourth switch (154, 254) is electrically connected to the second external antenna connector (122, 222), the first output terminal of the fourth switch (154, 254) is electrically connected to the second input terminal of the second switch (152, 252), the second output terminal of the fourth switch (154, 254) is electrically connected to the second input terminal of the third switch (153, 253),
wherein the first output terminal of the fourth switch (154, 254) is configured to output the second frequency band signal of the wireless wide area network to the second input terminal of the second switch (152, 252) in response to the second external antenna connector (122, 222) receiving the second frequency band signal of the wireless wide area network,
wherein the second output terminal of the fourth switch is configured to output the first frequency band signal of the wireless local area network to the second input terminal of the third switch (153, 253) in response to the second external antenna connector (122, 222) receiving the first frequency band signal of the wireless local area network.

6. The wireless receiving device of claim 5, **characterized in that** the switching circuit (130, 230) comprises:
a first switch (151, 251) comprising a first input terminal, a second input terminal, and an output terminal, wherein the output terminal of the first switch (151, 251) is electrically connected to a first port (161, 261, 271) of the first wireless signal module (260), the first input terminal of the first switch (151, 251) is electrically connected to a first internal antenna (131, 231), and the second input terminal of the first switch (151, 251) is electrically connected to the first external antenna connector (121, 221).

7. The wireless receiving device of claim 5, **characterized in that** the switching circuit (130, 230) further comprises:
a fifth switch (155, 255), comprising a first input terminal, a second input terminal, and an output terminal, wherein the output terminal of the fifth switch (155, 255) is electrically connected to a third port (163, 263) of the first wireless signal module (260), and the first input terminal of the fifth switch (155, 255) is electrically connected to a fourth internal antenna (134, 234);
a sixth switch (156, 256), comprising a first input terminal, a second input terminal, and an output terminal, wherein the output terminal of the sixth switch (156, 256) is electrically connected to a fourth port (164, 264) of the first wireless signal module (260), and the first input terminal of the sixth switch (156, 256) is electrically connected to a fifth internal antenna (135, 235); and
a seventh switch (157, 257) comprising an input terminal, a first output terminal, and a second output terminal, wherein the input terminal of the seventh switch (157, 257) is electrically connected to the third external antenna connector (123, 223), the first output terminal of the seventh switch (157, 257) is electrically connected to the second input terminal of the fifth switch (155, 255), and the second output terminal of the seventh switch (157, 257) is electrically connected to the second input terminal of the sixth switch (156, 256),
wherein the first output terminal of the seventh switch (157, 257) is configured to output the third frequency band signal of the wireless wide area network to the second input terminal of the fifth switch (155, 255) in response to the third external antenna connector (123, 223) receiving the third frequency band signal of the wireless wide area network,
and wherein the second output terminal of the seventh switch (157, 257) is configured to output the global navigation satellite signal to the second input terminal of the sixth switch (156, 256) in response to the third external antenna connector (123, 223) receiving the global navigation satellite signal.

8. The wireless receiving device of claim 7, **characterized in that** the switching circuit (130, 230) further comprises:
an eighth switch (158, 258), comprising a first input terminal, a second input terminal, and an output terminal, wherein the output terminal of the eighth switch (158, 258) is electrically connected to a fifth port (165, 265) of the first wireless signal module (260), the first input terminal of the eighth switch (158, 258) is electrically connected to a sixth internal antenna (136, 236), and the second input terminal of the eighth switch (158, 258) is electrically connected to the fourth external antenna connector (124, 224).

9. The wireless receiving device of any of claims 5 to 8, **characterized in that** the first frequency band signal of the wireless wide area network is a main signal of the wireless wide area network, the second frequency band signal of the wireless wide area network is an auxiliary signal of the wireless wide area network, the third frequency band signal of the wireless wide area network is a first multiple-input multiple-output signal of the wireless wide area network, the fourth frequency band signal of the wireless wide area network is a second multiple-input multiple-output signal of the wireless wide area network, and the first frequency band signal of the wireless local area network is a main signal of the wireless local area network.
